# FASCICULE DE BREVET EUROPEEN

(11) **EP 2 018 901 B1**
(45) Date de publication et mention de la délivrance du brevet: **20.04.2011**
(21) Numéro de dépôt: 08290654.6
(22) Date de dépôt: 03.07.2008
(51) Int. Cl.: B01D 53/14, C10L 3/10

(54) **Procédé d'élimination de gaz acides contenus dans les effluents gazeux**
Verfahren zur Entfernung von sauren Gasen aus Abgasen
Process for the removal of acidic gasses from gaseous waste streams

(30) Priorité: 12.07.2007 FR 0705113
(43) Date de publication de la demande: 28.01.2009
(73) Titulaire: IFP Energies nouvelles, 92852 Rueil-Malmaison Cedex (FR)
(72) Inventeur: Cadours Renaud, 69340 Francheville (FR); Magne-Drisch Julia, 38200 Villette-se-Vienne (FR); Delfort Bruno, 75005 Paris (FR)

(56) Documents cités:
- EP-A- 0 216 486
- FR-A- 2 888 247
- FR-A- 2 900 841
- US-A- 5 246 619

## Description

La présente invention concerne l'élimination de composés acides dans les effluents gazeux et notamment l'élimination de l'oxysulfure de carbone dans le gaz naturel.

Dans le cas du gaz naturel, trois principales opérations de traitement sont considérées : la désacidification, la déshydratation et le dégazolinage. La première étape, qui est la désacidification, a pour objectif l'élimination des composés acides tels que le dioxyde de carbone (CO₂), l'hydrogène sulfuré (H₂S), l'oxysulfure de carbone (COS) et les mercaptans, principalement le méthylmercaptan, l'éthylmercaptan et les propylmercaptans. Les spécifications généralement admises sur le gaz désacidifié sont 2% CO2, 4 ppm H2S, et 20 à 50 ppm volume de soufre total. L'étape de déshydratation permet ensuite de contrôler la teneur en eau du gaz désacidifié par rapport à des spécifications de transport. Enfin, l'étape de dégazolinage du gaz naturel permet de garantir le point de rosée hydrocarbure du gaz naturel, là encore en fonction de spécifications de transport.

La désacidification est donc souvent réalisée en premier lieu, et cela pour différentes raisons. Pour des raisons de sécurité, il est préférable d'éliminer les gaz acides toxiques tels que l'H₂S dans la première étape de la chaîne de procédés. Un autre intérêt de réaliser en tout premier lieu la désacidification est d'éviter la pollution des différentes opérations unitaires par ces composés acides, notamment la section de déshydratation et la section de condensation et de séparation des hydrocarbures les plus lourds. De plus, la présence de composés acides dans cette dernière section risque de conduire à la production de différentes coupes hydrocarbonées, C₁-C₂, C₃, C₄, C₅⁺ qui nécessitent toutes d'être traitées pour répondre aux spécifications requises. Selon les conditions de température et de pression, certaines de ces coupes sont liquides, nécessitant alors la mise en oeuvre de technologies spécifiques pour l'élimination des composés acides résiduels.

Les composés acides tels que le CO₂ et l'H₂S, sont généralement éliminés par le lavage du gaz à l'aide d'un solvant permettant une absorption de ces composés préférentiellement aux hydrocarbures. Cette absorption est, de préférence, favorisée par une réaction chimique. La mise en oeuvre d'une solution aqueuse d'alcanolamine est la solution la plus courante.

Le cas des impuretés soufrées telles que les mercaptans est par contre notablement différent. En effet, il n'y a pas, ou peu, de réaction entre les mercaptans et les alcanolamines classiquement mises en oeuvre. L'absorption se limite alors à la solubilisation physique de ces composés dans le solvant. Cette solubilisation physique peut être favorisée par une formulation spécifique du solvant. Il en résulte souvent une perte en hydrocarbure par co-absorption. Il peut être préférable de réaliser l'élimination de ces mercaptans en aval de l'étape de désacidification, par exemple par la mise en oeuvre de tamis d'adsorption.

Dans le cas du COS, la cinétique de la réaction reste limitante par rapport aux autres phénomènes de transfert mis en oeuvre lors du contact entre le gaz à traiter et la solution aqueuse d'alcanolamine. Les méthodes classiques de mise en oeuvre sont donc souvent inadaptées pour garantir les spécifications requises sur le gaz traité. En effet, l'oxysulfure de carbone non absorbé lors de l'étape de désacidification se partage finalement entre les différents produits résultant de l'étape de séparation des hydrocarbures décrite précédemment, ce qui impose alors de traiter chacune de ces coupes. Il est donc préférable de réaliser l'élimination complète du COS lors de l'étape de désacidification.

Le brevet FR 2 062 138 propose une solution à l'élimination du COS dans le gaz naturel. La méthode consiste à favoriser l'absorption du COS par une solution aqueuse d'alcanolamine en réalisant une zone d'absorption maintenue à une température comprise entre 60 et 90°C, de préférence entre 70 et 80 °C. La solution aqueuse d'alcanolamine permet ensuite de capter le CO₂ et l'H₂S issus de la réaction d'hydrolyse dans une autre zone opérant dans des conditions de température favorables à l'élimination de ces deux composés. Il est cependant nécessaire, selon le brevet FR 2 062 138, d'éliminer préalablement le CO₂ et l'H₂S présents dans le gaz à traiter de façon à favoriser le phénomène d'hydrolyse.

Le brevet US 6,852,144 décrit également une méthode d'élimination du COS des hydrocarbures. La méthode utilise un solvant eau-méthyldiéthanolamine ou eau-triéthanolamine contenant une forte proportion d'un composé appartenant au groupe suivant : piperazine et/ou méthylpiperazine et/ou morpholine, permettant de réaliser une absorption sélective du COS par rapport au dioxyde de carbone.

On peut également citer le brevet FR 2 888 247 qui concerne une méthode d'élimination du COS contenu dans une charge d'hydrocarbures liquides en mettant en contact la charge d'hydrocarbures liquides en contact avec une solution classique d'alcanolamine au moyen d'un contacteur membranaire.

Il est cependant bien connu que les alcanolamines primaires ou secondaires, utilisées dans les méthodes décrites précédemment, favorisent une forte réaction avec le COS, avec un risque non négligeable de dégradation en présence de COS. Les auteurs Kohl et Nielsen [Gas Purification 5ième Edition, Gulf Publishing Company] proposent une brève description des principales alcanolamines utilisées pour le traitement du gaz naturel. Leur ouvrage précise que la réactivité de l'alcanolamine vis-à-vis des gaz acides est corrélée au niveau de substitution de l'atome d'azote : plus l'atome d'azote est substitué, et moins l'alcanolamine est réactive. Les alcanolamines primaires sont donc plus réactives que les alcanolamines tertiaires. Cette réactivité peut être reliée à la stabilité des produits de réaction formés. Ainsi, les produits issus de la réaction d'un gaz acide avec une alcanolamine primaire seront plus stables que ceux issus d'une réaction avec une alcanolamine tertiaire. La régénération des alcanolamines primaires est donc généralement plus difficile. De plus il a été observé que les alcanolamines primaires présentent un risque important de dégradation en présence de COS. La réaction directe du COS avec la monoéthanolamine (MEA), alcanolamine primaire, conduit donc à des produits stables non régénérables. La diéthanolurée, la 2-oxazolidone et la (2-hydroxyéthyl)imidazolidone représentent les principaux produits de dégradation de la MEA en présence de COS. Ce processus de dégradation est étroitement lié aux conditions opératoires de l'étape de régénération du solvant. De ce fait, la MEA, ainsi que la plupart des alcanolamines primaires, n'est pas envisagée comme solvant régénérable pour l'élimination du COS.

La diéthanolamine (DEA), alcanolamine secondaire, est aussi largement utilisée pour l'élimination des produits acides d'un effluent gaz ou liquide. Sa basicité lui permet de réaliser une désacidification totale et une élimination poussée du COS. Selon Dawodu (1991), la DEA se dégrade en présence de COS pour donner des produits de dégradation solubles dans l'eau et un solide insoluble riche en soufre. Malgré cet inconvénient, la DEA reste une des alcanolamines les plus utilisées pour la désacidification d'un effluent gazeux.

La méthyldiéthanolamine (MDEA) est l'alcanolamine tertiaire la plus utilisée, généralement pour l'élimination sélective de l'H₂S par rapport au CO₂. Les performances d'élimination du COS par la MDEA sont médiocres et il est nécessaire d'ajouter un activateur cinétique, généralement une alcanolamine primaire ou secondaire, pour optimiser l'efficacité du solvant du procédé.

La présente invention a donc pour objet de palier un ou plusieurs des inconvénients de l'art antérieur en proposant une méthode permettant d'éliminer les gaz acides, tels que le CO₂, l'H₂S et le COS, du gaz naturel par l'utilisation d'une alcanolamine primaire présentant une stabilité chimique vis-à-vis du COS plus grande que celles de l'art antérieur.

La présente invention concerne un procédé d'élimination des gaz acides contenus dans les effluents gazeux, tels que le gaz naturel et les fumées, comprenant :
- une étape d'absorption des gaz acides par mise en contact des effluents gazeux avec une solution aqueuse comprenant de la 2-[2-amino-1-(aminomethyl)ethoxy]ethanol, et
- au moins une étape de régénération de la solution aqueuse.

Le procédé est notamment utilisé pour éliminer l'oxysulfure de carbone.

La solution aqueuse peut comprendre entre 5% et 60% en poids de 2-[2-amino-1-(aminomethyl)ethoxy]ethanol, et de préférence entre 50% et 60% en poids de 2-[2-amino-1-(aminomethyl)ethoxy]ethanol.

Dans le procédé selon l'invention, la 2-[2-amino-1-(aminomethyl)ethoxy]ethanol peut être utilisée en tant qu'activateur d'une autre alcanolamine, la quantité totale d'alcanolamines pouvant atteindre jusqu'à 60% en poids, avec jusqu'à 15% en poids de 2-[2-amino-1-(aminomethyl)ethoxy]ethanol.

L'autre alcanolamine peut être de la MDEA (méthyldiéthanolamine) ou tout autre alcolamine tertiaire.

Selon l'invention la solution aqueuse peut comprendre également un composé organique, représentant entre 0% et 60% en poids de la solution aqueuse. Dans ce cas la quantité d'alcanolamines totale est comprise entre 20% et 60% en poids.

L'étape d'absorption des gaz acides se fait à une pression comprise entre 50 bars et 80 bars, et une température comprise entre 30°C et 90°C.

Le procédé selon l'invention peut comporter une deuxième étape de régénération de la solution aqueuse.

Les étapes de régénération se font par détente et/ou régénération thermique, à une pression comprise entre 1 bar et 5 bars et une température comprise entre 100°C et 180°C.

D'autres caractéristiques et avantages de l'invention seront mieux compris et apparaîtront clairement à la lecture de la description faite, ci-après, en se référant aux figures annexées et données à titre d'exemple:
- la figure 1 schématise un procédé selon l'invention,
- la figure 2 représente deux voies de synthèse de la molécule selon l'invention.

La présente invention propose d'utiliser une molécule permettant d'associer les caractéristiques d'une alcanolamine primaire et la stabilité chimique vis-à-vis du COS : la 2-[2-amino-1-(aminométhyl)éthoxy]éthanol, dont la formule (A) est représentée ci-dessous. 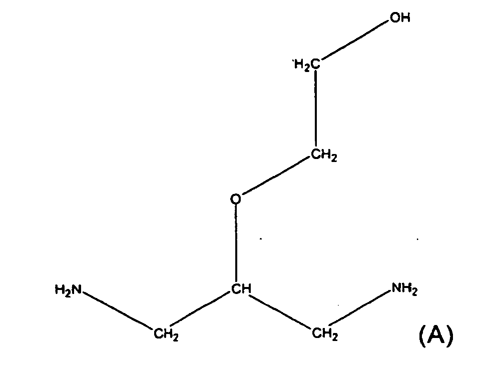 Cette molécule de formule A présente deux fonctions amines primaires, ce qui lui confère une réactivité importante avec les gaz acides tels que le CO₂, l'H₂S et le COS. La présence du groupement éthanol favorise sa solubilité dans une solution aqueuse, comme pour les alcanolamines classiquement mises en oeuvre. La présence du groupement éthoxy confère à la molécule une stabilité vis-à-vis du COS, comme cela a déjà été observé dans le cas de la 2-aminoéthoxyéthanol.

Cette molécule peut être obtenue par plusieurs voies de synthèse. Une voie déjà connue pourrait être extrapolée à la molécule revendiquée ici. Elle est décrite par le brevet WO 9 321 254. Cette voie consiste en une polyoxyalkylation d'un amino-alcoolate obtenu par réaction sur un amino-alcool d'un sel anhydre de sodium, potassium, césium ou rubidium. Ce brevet propose de se placer dans des conditions telles que la fonction amine ne devrait pas réagir avec l'époxyde car la réaction favorisée serait la réaction entre l'alcoolate et l'époxyde. L'alcoolate formé par réaction entre la fonction alcool et un sel anhydre de sodium, potassium, césium ou rubidium est jugé dans ce brevet beaucoup plus réactif que l'amine. Ceci est illustré à travers les exemples de ce brevet WO 9 321 254. Il n'est pas démontré toutefois que la sélectivité entres les deux réactions soient totales et la présence de produits issus de la réaction entre la fonction amine et l'époxyde n'est pas à exclure. De plus, cette méthode semble réservée à la synthèse en laboratoire à très faible échelle car, pour procéder correctement, il faudrait convertir la totalité des fonctions alcools en alcoolates, c'est-à-dire utiliser une quantité équimolaire de sel/précurseur de sodium, potassium, césium ou rubidium pour générer l'alcoolate. La rapidité et l'exothermie de la réaction interdisent sa mise en oeuvre à une grande échelle, et encore moins industriellement. De plus dans ce brevet, les temps de réaction sont longs.

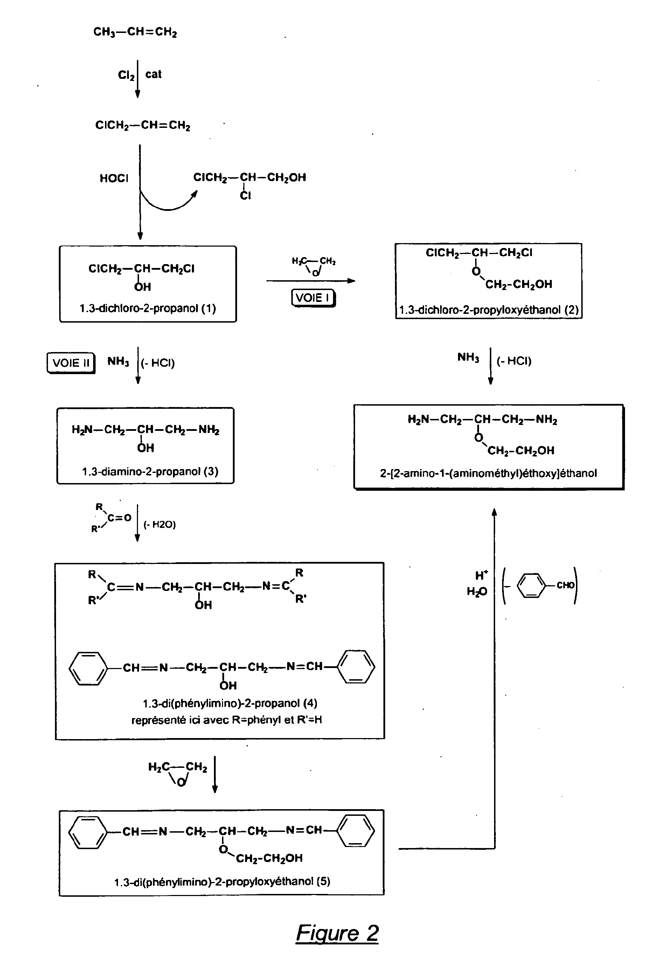

La synthèse de la 2-[2-amino-1-(aminométhyl)éthoxy]éthanol utilisée dans le cadre de l'invention peut être réalisée selon au moins deux autres voies de synthèse (I et II) que nous décrivons ici, et illustrées sur la figure 2.

Le produit de départ commun à ces deux voies est le 1.3-dichloro-2-propanol. Il s'agit d'un produit industriel commercialement disponible qui est utilisé notamment comme précurseur de l'épichlorhydrine. Ce produit est le plus souvent préparé industriellement à partir de propylène, en deux étapes qui sont tout d'abord une chloration avec du dichlore conduisant au 3-chloropropène suivie de l'addition d'acide hypochloreux conduisant d'une part au 1.2-dichloro-1-propanol et d'autre part au 1.3-dichloro-2-propanol qui nous intéresse ici.

Selon une première voie (I), la préparation de la 2-[2-amino-1-(aminométhyl)ethoxy]éthanol comprend les deux étapes suivantes :
1 - à partir du 1.3-dichloro-2-propanol (1) on effectue une réaction d'éthoxylation par réaction avec de l'oxyde d'éthylène conduisant au 1.3-dichloro-2-propyloxyéthanol (2). Cette réaction s'effectue généralement en utilisant un catalyseur basique tel que par exemple la soude, l'hydrure de sodium ou tout autre composé transformant la fonction alcool du 1.3-dichloro-2-propanol en alcoolate alcalin ou alcalinoterreux qui est l'espèce active qui réagit avec le cycle oxyrane. La concentration de catalyseur est comprise entre 0.1% et 2% mole par mole de fonction hydroxyle. Afin de s'affranchir d'une réaction de polymérisation de l'oxyde d'éthylène, la réaction sera effectuée dans des conditions douces à une température inférieure à 70°C et le plus souvent à la température ambiante. En fin de réaction le milieu sera neutralisé avec un acide pour convertir les fonctions alcoolates en fonctions alcools.
2 - une réaction de type amination entre le 1.3-dichloro-2-propyloxyéthanol (2) obtenu précédemment et de l'ammoniac conduisant à la 2-[2-amino-1-(aminométhyl)ethoxy]éthanol. Cette réaction s'effectue en utilisant un excès d'ammoniac par rapport aux atomes de chlore afin de garantir l'obtention d'amines primaires. La réaction s'effectue à une température comprise entre la température ambiante et 150°C le plus souvent entre 30°c et 80°C. En fin de réaction l'excès d'ammoniac est éliminé et le milieu est traité par une base par exemple la soude pour éliminer l'acide chlorhydrique issu de la réaction de condensation. Le produit obtenu, la 2-[2-amino-1-(aminométhyl)ethoxy]éthanol est purifié de préférence par distillation.

Selon une deuxième voie (II), la préparation de la 2-[2-amino-1-(aminométhyl)ethoxy]éthanol comprend les quatre étapes suivantes :
1 - à partir du 1.3-dichloro-2-propanol (1) on effectue une réaction d'amination avec de l'ammoniac dans des conditions similaires à celles décrites dans l'étape 2 précédente. Cette réaction conduit au 1.3-diamino-2-propanol (3).
2 - sur le 1.3-diamino-2-propanol obtenu on effectue une réaction de protection des fonctions amines par un composé carbonylé RR'C=O choisi parmi les aldéhydes ou les cétones, par exemple un aldéhyde tel le benzaldéhyde. Cette réaction conduit au 1.3-di(phénylimino)-2-propanol (4). Cette réaction s'effectue en présence d'un excès de benzaldéhyde à une température et dans des conditions permettant l'élimination de l'eau de condensation afin de favoriser la réaction. On peut tout aussi bien utiliser comme composés carbonylés de l'acétone conduisant au 1.3-di(diméthylimino)-2-propanol ou de la méthyléthylcétone conduisant au 1.3-di(méthyléthylimino)-2-propanol.
3 - à partir du 1.3-di(phénylimino)-2-propanol (4 sur le schéma) issu de l'étape précédente, on effectue une réaction d'éthoxylation par réaction avec de l'oxyde d'éthylène conduisant au 1.3-di(phénylimino)-2-propyloxyéthanol (5). Cette réaction d'éthoxylation s'effectue dans les mêmes conditions générales que celle décrite dans la voie (I) lors de la première étape.
4 - à partir du 1.3-di(phénylimino)-2-propyloxyéthanol (5) préparé précédemment, ou d'un composé similaire dans lequel l'agent de protection des fonctions amine RR'C=O serait différent du benzaldéhyde, on effectue une réaction de dé-protection des fonctions amine. Il s'agit d'une réaction d'hydrolyse des amines réalisée en milieu acide. L'acide chlorhydrique peut être avantageusement utilisé. La réaction s'effectue à la température de reflux de l'eau. Les produits sont ensuite séparés. Le produit obtenu, la 2-[2-amino-1-(aminométhyl)ethoxy]éthanol, est purifié de préférence par distillation.

La molécule ainsi synthétisée présente une forte réactivité avec les gaz acides par la présence des deux fonctions primaires, une solubilité dans l'eau semblable à celle des alcanolamines généralement utilisées en raison de la présence de la fonction alcool, et une grande stabilité vis-à-vis du COS. Sa mise en oeuvre pour le traitement du gaz naturel permet donc de viser une désacidification totale du gaz, avec l'élimination du CO₂, de l'H₂S et du COS. La 2-[2-amino-1-(aminomethyl)ethoxy]ethanol pourra être utilisée comme agent réactif principal du solvant, ou comme activateur cinétique d'une autre alcanolamine, et de préférence une alcanolamine tertiaire.

La configuration du procédé mettant en oeuvre une solution comprenant la 2-[2-amino-1-(aminomethyl)ethoxy]ethanol est semblable à la configuration d'un procédé mettant en oeuvre une solution aqueuse d'alcanolamine classique. Cette configuration est bien connue de l'homme de l'art.

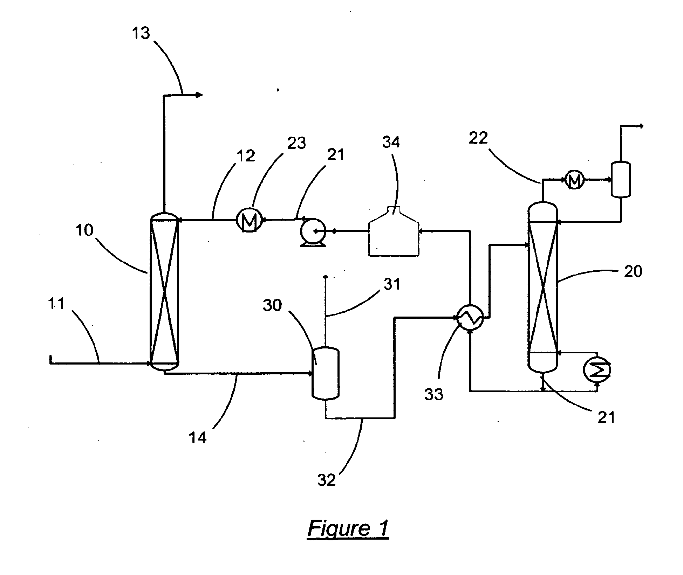

La première étape du procédé est une étape d'absorption des gaz acides par contact avec la solution aqueuse d'alcanolamine. Comme illustré sur la figure 1, la colonne d'absorption (10) est alimentée en fond par le gaz à traiter (11), et en tête par le solvant de désacidification (12). Le contact gaz liquide entre le gaz à désacidifier et le solvant contenant la 2-[2-amino-1-(aminomethyl)ethoxy]ethanol se fait à la pression de disponibilité du gaz et à une température comprise entre 30°C et 90 C, de préférence entre 40°C et 60°C. Par exemple, dans le cas du traitement d'un gaz naturel, l'étape d'absorption des gaz acides pourra être réalisée à une pression comprise entre 20 et 120 bars absolus, généralement entre 50 et 80 bars absolus. Lors de l'étape d'absorption, les gaz acides sont transférés dans le solvant dans lequel ils réagiront avec la 2-[2-amino-1-(aminomethyl)ethoxy]ethanol, seule ou en mélange avec une autre alcanolamine, selon des réactions acide-base bien connues de l'homme de l'art, et déjà décrites dans le cas des alcanolamines classiquement mises en oeuvre pour la désacidification d'un effluent gazeux. A l'issu de cette étape d'absorption, on récupère en tête de colonne le gaz traité (13) et le solvant chargé en gaz acides (14) en fond de colonne.

Une deuxième étape du procédé consiste à régénérer le solvant issu de l'étape d'absorption et contenant les produits des réactions entre les gaz acides et la 2-[2-amino-1-(aminomethyl)ethoxy]ethanol, seule ou en mélange avec une autre alcanolamine. La régénération peut se faire par détente (30) et/ou par régénération thermique. Cette étape de détente (30) permet de récupérer les hydrocarbures coabsorbés (31) dans le solvant avec les gaz acides. Le solvant récupéré (32) est ensuite réchauffé dans l'échangeur de chaleur (33) et envoyé vers la colonne de régénération thermique (20). On obtient en tête de colonne les gaz acides (22) et le solvant régénéré chaud (21) en fond de colonne. Le solvant chaud (21) obtenu en fond de régénération est utilisé pour chauffer le solvant à régénérer et est envoyé vers un bac de stockage (34) qui sert à alimenter la colonne d'absorption. Le solvant d'absorption (12) est régulé en température par un système de régulation (23) avant d'être introduit dans la colonne d'absorption (10).

Cette étape de régénération thermique sera réalisée à des pressions comprises entre 1 et 5 bars absolus, généralement entre 1 et 2,5 bars absolus. La température en fond de colonne est corrélée à la pression de régénération et la teneur en alcanolamine du solvant à régénérer. Cette température sera comprise entre 100 et 150 C, généralement entre 110 et 130°C.

Une phase de régénération supplémentaire peut être envisagée si nécessaire. Elle a pour objectif de traiter une fraction du solvant de façon à obtenir un niveau de régénération compatible avec les objectifs du procédé pour l'élimination de gaz acides. Il s'agit de minimiser la teneur en gaz acides du solvant renvoyé vers la section de régénération.

Les conditions opératoires de cette seconde phase de régénération sont similaires à celles de la section de régénération décrite ci-dessus. De préférence, le niveau thermique de cette seconde section peut être plus élevé. Le débit de vapeur généré dans la section thermique peut lui aussi être plus important.

Le solvant utilisé dans le cadre de l'invention pour éliminer les gaz acides des effluents gazeux est donc composé de 2-[2-amino-1-(aminomethyl)ethoxy]ethanol, en solution dans de l'eau. La concentration de 2-[2-amino-1-(aminomethyl)ethoxy]ethanol en solution est comprise entre 5 et 60 % en poids . La 2-[2-amino-1-(aminomethyl)ethoxy]ethanol peut être le seul composé réactif du solvant, notamment vis-à-vis des gaz acides. Dans ce cas, la concentration en 2-[2-amino-1-(aminomethyl)ethoxy]ethanol sera comprise entre 30 et 60 % en poids. La 2-[2-amino-1-(aminomethyl)ethoxy]ethanol peut également être mélangée avec une autre alcanolamine. Dans ce cas les alcanolamines classiquement mises en oeuvre peuvent être utilisées. La 2-[2-amino-1-(aminomethyl)ethoxy]ethanol peut notamment être utilisée en mélange avec de la MDEA ou tout autre alcanolamine tertiaire connue de l'homme de l'art. La solution aqueuse contient alors jusqu'à 60 % poids d'alcanolamines totales. Dans cette configuration, la 2-[2-amino-1-(aminomethyl)ethoxy]ethanol représente jusqu'à 15 % poids de la solution.

Une alternative aux solutions aqueuses de 2-[2-amino-1-(aminomethyl)ethoxy]ethanol consiste à mettre en oeuvre un solvant composé de 2-[2-amino-1-(aminomethyl)ethoxy]ethanol, seule ou en mélange avec une autre alcanolamine, d'eau et d'un composé organique. Les composés organiques peuvent être de préférence de l'eau, des glycols, des polyéthylèneglycols, des polypropylèneglycols, des copolymères éthylèneglycol-propylèneglycol, des éthers de glycols, des alcools, des urées, des lactames, des pyrrolidones N-alkylées, des pipéridones N-alkylées, des cyclotétraméthylènesulfones, des N-alkylformamides, des N-alkylacétamides, des éther-cétones ou des phosphates d'alkyls et leurs dérivés. A titre d'exemple et de façon non limitative, il peut s'agir d'eau, de tétraéthylèneglycoldiméthyléther, de sulfolane, de N-méthylpyrrolidone, de carbonate de propylène, de diméthylpropylèneurée, de N-méthylcaprolactame, de diméthylformamide, de diméthylacétamide, de formamide, d'acétamide, de 2-méthoxy-2-méthyl-3-butanone, de 2-méthoxy-2-méthyl-4-pentanone, ou de tributylphosphate. Le composé organique représentera de 0 à 60 % poids du mélange, la 2-[2-amino-1-(aminomethyl)ethoxy]ethanol, seule ou en mélange avec une autre alcanolamine, représentera de 20 à 60 % poids, le complément étant réalisé par addition d'eau.

La solution aqueuse utilisée dans le cadre de l'invention est préférentiellement utilisée pour la désacidification d'un gaz naturel, notamment dans le cas d'une élimination du COS contenu dans la charge. Elle peut être aussi envisagée pour toute application de désacidification d'un effluent gazeux, comme par exemple les applications de décarbonatation de fumées, comme les fumées de combustion, les fumées de hauts-fourneaux ou de cimenterie.

Le procédé peut aussi être mis en oeuvre pour la désacidification d'un effluent liquide, notamment une coupe hydrocarbure condensée. Cette coupe peut par exemple être issue du fractionnement d'un gaz naturel, comme décrit précédemment.

## Revendications

1. Procédé d'élimination des gaz acides contenus dans les effluents gazeux, **caractérisé en ce qu'**il comprend :
- une étape d'absorption des gaz acides par mise en contact de l'effluent gazeux avec une solution aqueuse comprenant de la 2-[2-amino-1-(aminomethyl)ethoxy]ethanol, et
- au moins une étape de régénération de la solution aqueuse.

2. Procédé selon la revendication 1, **caractérisé en ce qu'**il consiste à éliminer l'oxysulfure de carbone.

3. Procédé selon une des revendications 1 ou 2, **caractérisé en ce que** la solution aqueuse comprend entre 5% et 60% en poids de 2-[2-amino-1-(aminomethyl)ethoxy]ethanol.

4. Procédé selon la revendication 3, **caractérisé en ce que** la solution aqueuse comprend entre 50% et 60% en poids de 2-[2-amino-1-(aminomethyl)ethoxy]ethanol.

5. Procédé selon une des revendications 1 à 4, **caractérisé en ce que** la 2-[2-amino-1-(aminomethyl)ethoxy]ethanol est utilisée en tant qu'activateur d'une autre alcanolamine, la quantité totale d'alcanolamines pouvant atteindre jusqu'à 60% en poids, avec jusqu'à 15% en poids de 2-[2-amino-1-(aminomethyl)ethoxy]ethanol.

6. Procédé selon la revendication 5, **caractérisé en ce que** la solution aqueuse comprend de la MDEA (méthyldiéthanolamine) ou tout autre alcolamine tertiaire.

7. Procédé selon une des revendications 1 à 6, **caractérisé en ce que** la solution aqueuse comprend un composé organique, représentant entre 0% et 60% en poids de la solution aqueuse, et entre 20% et 60% d'alcanolamines.

8. Procédé selon une des revendications 1 à 7, **caractérisé en ce que** l'étape d'absorption des gaz acides se fait à une pression comprise entre 50 bars et 80 bars , et une température comprise entre 30°C et 90°C.

9. Procédé selon une des revendications 1 à 8, **caractérisé en ce que** les étapes de régénération se font par détente et/ou régénération thermique.

10. Procédé selon la revendication 9, **caractérisé en ce que** l'étape de régénération thermique est réalisée à une pression comprise entre 1 bar et 5 bars et une température comprise entre 100°C et 180°C.

## Claims

1. A method of removing acid gases contained in gaseous effluents, **characterized in that** it comprises:
- an acid gas absorption stage by contacting the gaseous effluent with an aqueous solution comprising 2-[2-amino-1-(aminomethyl)ethoxy]ethanol, and
- at least one aqueous solution regeneration stage.

2. A method as claimed in claim 1, **characterized in that** it consists in removing carbonyl sulfide.

3. A method as claimed in any one of claims 1 or 2, **characterized in that** the aqueous solution comprises between 5% and 60% by weight of 2-[2-amino-1-(aminomethyl)ethoxy] ethanol.

4. A method as claimed in claim 3, **characterized in that** that the aqueous solution comprises between 50% and 60% by weight of 2-[2-amino-1-(aminomethyl) ethoxy]ethanol.

5. A method as claimed in any one of claims 1 to 4, **characterized in that** the 2-[2-amino-1-(aminomethyl)ethoxy]ethanol is used as an activator of another alkanolamine, and the total amount of alkanolamines can reach up to 60% by weight, with up to 15% by weight of 2-[2-amino-1-(aminomethyl)ethoxy] ethanol.

6. A method as claimed in claim 5, **characterized in that** the aqueous solution comprises MDEA (methyldiethanolamine) or any other tertiary alkanolamine.

7. A method as claimed in any one of claims 1 to 6, **characterized in that** the aqueous solution comprises an organic compound, representing between 0% and 60% by weight of the aqueous solution, and between 20% and 60% of alkanolamines.

8. A method as claimed in any one of claims 1 to 7, **characterized in that** the acid gas absorption stage is carried out at a pressure ranging between 50 bars and 80 bars, and at a temperature ranging between 30°C and 90°C.

9. A method as claimed in any one of claims 1 to 8, **characterized in that** the regeneration stages are carried out by expansion and/or thermal regeneration.

10. A method as claimed in claim 9, **characterized in that** the thermal regeneration stage is carried out at a pressure ranging between 1 bar and 5 bars, and at a temperature ranging between 100°C and 180°C.

## Patentansprüche

1. Verfahren zur Entfernung der sauren Gase, die in Abgasen enthalten sind, **dadurch gekennzeichnet, dass** es Folgendes umfasst:
- einen Schritt der Absorption der sauren Gase, indem das Abgas mit einer wässrigen Lösung in Kontakt gebracht wird, die 2-[2-Amino-1-(aminomethyl)ethoxy]ethanol umfasst, und
- mindestens einen Schritt der Regenerierung der wässrigen Lösung.

2. Verfahren nach Anspruch 1, **dadurch gekennzeichnet, dass** es darin besteht, Carbonylsulfid zu entfernen.

3. Verfahren nach einem der Ansprüche 1 oder 2, **dadurch gekennzeichnet, dass** die wässrige Lösung zwischen 5 Gew.-% und 60 Gew.-% an 2-[2-Amino-1-(aminomethyl)ethoxy]ethanol umfasst.

4. Verfahren nach Anspruch 3, **dadurch gekennzeichnet, dass** die wässrige Lösung zwischen 50 Gew.-% und 60 Gew.-% an 2-[2- Amino-1-(aminomethyl)ethoxy]ethanol umfasst.

5. Verfahren nach einem der Ansprüche 1 bis 4, **dadurch gekennzeichnet, dass** der 2-[2- Amino-1-(aminomethyl)ethoxy]ethanol als Aktivator eines weiteren Alkanolamins verwendet wird, wobei die Gesamtmenge an Alkanolaminen bis zu 60 Gew.-% erreichen kann, mit bis zu 15 Gew.-% an 2-[2- Amino-1-(aminomethyl)ethoxy]ethanol.

6. Verfahren nach Anspruch 5, **dadurch gekennzeichnet, dass** die wässrige Lösung MDEA (Methyldiethanolamin) oder ein beliebigen anderes tertiäres Alkoholamin umfasst.

7. Verfahren nach einem der Ansprüche 1 bis 6, **dadurch gekennzeichnet, dass** die wässrige Lösung eine organische Verbindung, die zwischen 0 Gew.-% und 60 Gew.-% der wässrigen Lösung ausmacht, und zwischen 20 % und 60 % an Alkanolaminen umfasst.

8. Verfahren nach einem der Ansprüche 1 bis 7, **dadurch gekennzeichnet, dass** der Schritt der Absorption der sauren Gase bei einem Druck im Bereich von 50 bar bis 80 bar und einer Temperatur im Bereich von 30 °C bis 90 °C erfolgt.

9. Verfahren nach einem der Ansprüche 1 bis 8, **dadurch gekennzeichnet, dass** die Schritte der Regenerierung durch Entspannung und/oder thermische Regenerierung erfolgen.

10. Verfahren nach Anspruch 9, **dadurch gekennzeichnet, dass** der Schritt der thermischen Regenerierung bei einem Druck im Bereich von 1 bar bis 5 bar und einer Temperatur im Bereich von 100 °C bis 180 °C erfolgt.
